# EUROPEAN PATENT APPLICATION

(11) **EP 3 972 398 A1**
(43) Date of publication of application: **23.03.2022**
(21) Application number: 20306036.3
(22) Date of filing: 16.09.2020
(51) Int. Cl.: H05K 5/02, G06F 21/86, H05K 7/20

(54) **ENCLOSURE WALLS**

(71) Applicant: Hewlett-Packard Development Company, L.P., Spring TX 77389 (US)
(72) Inventor: De Marcillac, Patrick, 38053 Grenoble (FR); Vallon, Pascal, 38053 Grenoble (FR); Gimenez, Jordi, 08174 Sant Cugat del Valles (ES)
(74) Representative: Haseltine Lake Kempner LLP

(57) **Abstract**

In one example, there is provided a wall for an enclosure. The wall comprises a passage for permitting air to pass from a first side of the wall to a second side of the wall. The passage comprises a first opening forming an inlet for the passage on the first side of the wall and a second opening forming an inlet for the passage on the second side of the wall. The passage extends through the wall in a first direction and in a second direction, with the second direction being different to the first direction, such that a continuous straight line trajectory from the first opening to the second opening through the passage is prevented.

## Description

### BACKGROUND

Some enclosures are to house devices that generate heat and therefore may allow heat to dissipate out of the enclosure.

### BRIEF DESCRIPTION OF DRAWINGS

Examples will now be described, by way of non-limiting example, with reference to the accompanying drawings, in which:
Figures 1a and 1b are simplified schematic cross sections through part of example walls for an enclosure;
Figure 2 is a simplified schematic of an example enclosure comprising the wall of Figure 1a or 1b;
Figure 3 is a simplified schematic cross-section through part of an example wall for an enclosure;
Figures 4a-4e are simplified schematic cross-sections through example passages in part of a wall for an enclosure;
Figures 5a-4d are simplified schematic cross-sections showing example passage geometries;
Figure 6 is a flowchart of an example method;
Figure 7 is a flowchart of an example method; and
Figure 8 is a simplified schematic of an example machine-readable medium in association with a processor.

### DETAILED DESCRIPTION

Some examples herein relate to a wall for an enclosure that is to house an active device. For example, the enclosure may comprise a locker for the device. An active device may comprise a device that generates heat and therefore heat may be generated by such devices within the enclosure when the device is housed in the enclosure. For example, the device may be on and powered (e.g. running or operating) and/or maybe connected to a network. To allow the heat generated by the device to leave the enclosure, according to some examples herein the enclosure comprises a passage for air. In this way, any heat generated by the device may leave the enclosure via the passage. In some examples, the enclosure may comprise an array of passages, or a plurality of passages to improve air flow into and out of the enclosure. However, when an enclosure wall comprises an air passage this may allow a person to see, through the passage, inside the device. In examples where the enclosure houses a valuable device an opportunist thief may decide to tamper with the enclosure to get access to the device upon the discovery that it is valuable. Some enclosures may comprise an actuator located within the enclosure to override a lock on the enclosure (for example a manual actuator such as a switch or lever to override an electronic lock, thereby causing a locked door of the enclosure to be unlocked and opened allowing access to the enclosure). An opportunist thief, seeing that the enclosure houses a valuable item, may attempt to insert a device such a screwdriver into a passage in an enclosure wall to tamper with the manual actuator to unlock the enclosure. Of course, anyone may also attempt to insert a device such as a screwdriver into a passage in an enclosure wall to tamper with the enclosure itself or any contents of the enclosure.

Some examples herein relate to a wall for an enclosure, or a barrier to at least partially enclosure a device, the barrier thereby forming an enclosure wall, that comprises a passage that extends through the wall in two directions to prevent a continuous straight-line path through the passage. In this way, the passage does not allow anyone to see into the enclosure through the passage (since a straight line-of-sight path is prevented) and it is not possible to pass a straight implement (such as a screwdriver) through the passage, e.g. from one side of the wall to another. In this way, the two-directional passage can prevent the insertion of straight implements from an exterior of the device to the interior of the device. The passage referred to herein may comprise a plurality, or several passages, that may be referred to as passages sections. The passage may be connected to another passage and, in this way, some examples herein may describe a wall comprising a series of interconnected passages.

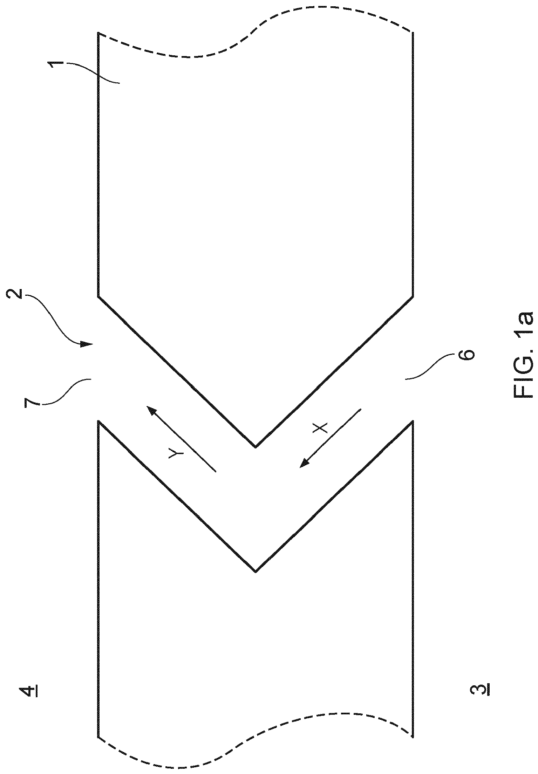

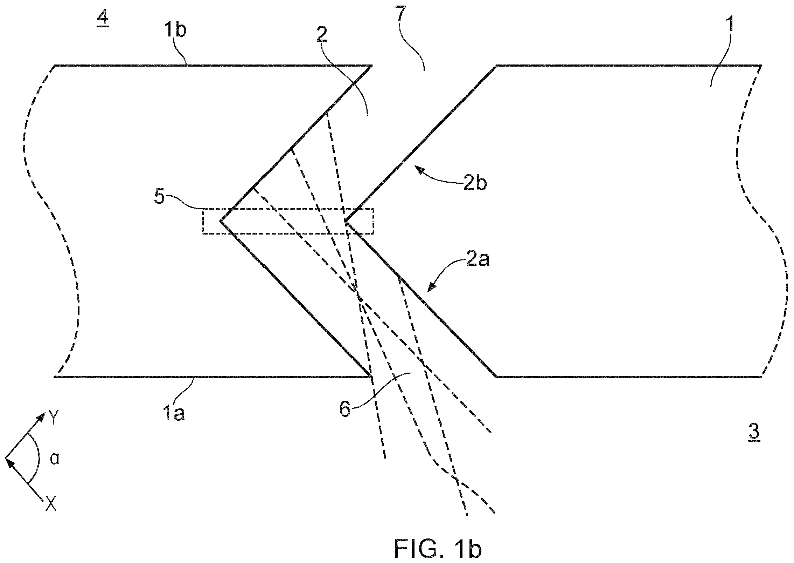

Figure 1a shows a portion of a wall 1 for a (not shown in Figure 1) enclosure. The wall 1 comprises a passage 2 (or hole or ventilation/air hole) that permits air to pass from a first side 3 of the wall 1 to a second side 4 of the wall 1. The passage 2 comprises a first opening 6 forming an inlet for the passage 2 on the first side 3 of the wall 1 and a second opening 7 forming an inlet for the passage 2 on the second side 4 of the wall 1. Depending on the direction of airflow through the passage 2 one of the openings 6, 7, may function as in inlet to the passage with the other opening functioning as an outlet. The passage 2 extends through the wall 1 in two directions, labelled X and Y in Figure 1. The passage 2 extends through the wall 1 in a first direction X and in a second direction Y, with the section direction Y being different to the first direction X such that a continuous straight line trajectory from the first opening 6 to the second opening 7 through the passage 2 is prevented. The passage 2 therefore extends through the wall 1 in a zig-zag fashion.

Figure 1b shows a wall 1, which may comprise the wall 1 shown in Figure 1a, with some elements of the wall geometry shown in further detail. As shown in Figure 1b, according to some examples the passage 2 of the wall 1 comprises a first passage section 2a and a section passage section 2b. The first passage section 2a is the portion (or part or section etc.) of the passage 2 that extends through the wall in the first direction X. The first passage section 2a in this is example is a portion of the passage 2 that extends through the wall 1 from the first opening 6. The second passage section 2b is the portion (or part or section etc.) of the passage 2 that extends through the wall in the second direction Y. The second passage section 2b in this is example is a portion of the passage 2 that extends through the wall 1 from the second opening 7. The wall 1 of this example comprises a first face, or surface, 1a and a second face, or surface, 1b the first face 1 a facing the first side 3 of the wall 1 and the second face 1b facing the second side 4 of the wall 1. The first face 1a comprises the first opening 6 and the second face 1b comprises the second opening 7.

The passage 2 extends through the wall 1 in two different directions, X and Y. The angle between the first and second directions X, Y is denoted by alpha and in some examples alpha may be approximately 45 degrees. In some examples the angle alpha may be less than 45 degrees. In other examples the angle alpha may be other than 45 degrees (for example 90 degrees, or less than 90 degrees). That the passage 2 extends in the two different directions X, Y defines a change in direction of the passage, or a "turn" in the passage (for example, an object, e.g. air particles, travelling through the passage 2 from the opening 6 to the opening 7 needs to change its direction as it turns from the passage section 2a to the second passage section 2). The lower the value of the angle between the two directions X, Y meaning the sharper the "turn" needed for an object to pass from the first passage section 2a to the second passage section 2b. In some examples, the second direction Y may be defined as being at an angle alpha to the first.

or That the passages 2 extends through the wall 1 in the two different directions defines a portion 5, or mid-region 5, of the passage 2 representing the point in the passage 2 in between the first portion 2a (the portion extending in the first direction X) and the second portion 2b (the portion extending in the second direction Y). In some examples, the portion 5 is located mid-way through the passage 2. The portion 5 is therefore an opening in the passage 2. As indicated above, the passage 2 extends through the wall 1 in a first direction X and in a different, second, direction Y such that a continuous straight line trajectory from the first opening 6 to the second opening 7 through the passage 2 is prevented. This is indicated by the various dotted lines illustrated in Figure 1b. Put another way, the passage 2 extends in the first and second directions X, Y such that no continuous straight line is possible between the first and second openings 6, 7 (any straight line path through the passage needs to be piecewise, hence discontinuous, since the path needs to change direction at the portion 5). In other words, for an object (for example, air) to pass from the first opening 6 to the second opening 7 through the passage 2, that object needs to curve, turn, or otherwise change direction. The first and second openings 6, 7 (e.g. cross-sections thereof) in this example are not offset from one another. Put another way, the cross-sections of the first and second openings 6, 7 substantially overlap. However, in other examples the first and second openings 6, 7 (e.g. cross-sections thereof) may be offset from one another. For example the cross-sections of the first and second openings 6, 7 may have a non-zero, but small or minimal, overlap or no overlap at all. The mid-portion 5 (e.g. a cross-section thereof) of the passage 2 is offset from both the first and second openings 6, 7 (e.g. cross-sections thereof) to prevent a continuous straight-line path through the passage as described above. For example, there is no overlap between a cross-section through the mid-portion 5 of the passage 2 and a cross section of the opening 6 and/or the opening 7. Herein, by cross-section it is meant any cross section through the passage, for example a cross-section taken through the passage in a direction perpendicular to a direction of airflow through the passage. In another example, a cross-section may comprise a cross-section taken through the passage parallel to a direction that is the (vector) sum of the directions X and Y. In yet another example, a cross-section may comprise a cross-section taken through the passage in a direction parallel to the planes of the first and/or second surfaces 1a, 1b, or parallel to the wall 1 itself.

Each opening 6, 7, may comprise a shape that defines the shape of the opening, with one, or both, of the openings 6, 7, comprising a triangular, circular, oval, square, rectangular, pentagonal, hexagonal, heptagonal, octagonal, nonagonal, decagonal, (more generally, polygonal or n-gonal) etc. shape. In these examples, the passage 2 may have a corresponding shape that is the 3D extension of the 2D shape of the opening. For example, the passage 2 may comprise a cylindrical passage extending between two circular, or cylindrical, openings. The passage 2 may comprise a rectangular prism in examples where the two openings 6, 7, are rectangular or square. The passage 2 may comprise a hexagonal prism in examples where the openings 6, 7 are hexagonal, etc. By the shape of an opening it may be meant that a cross-section through the opening (e.g. in a direction parallel to the plane of the first and/or second surfaces 1a, 1b or parallel to the wall 1, or perpendicular to a direction or airflow entering the opening etc.) is of that shape. For example, a hexagonal opening 6 comprises a hexagonal cross-section (e.g. in one of the directions as described above).

The first surface 1a of the wall 1 may be to form part of an exterior surface of an enclosure when the wall 1 is part of the enclosure and the second surface 1b of the wall 1 may be to form part of an interior surface of the enclosure when the wall 1 is part of the enclosure. In other words, when the wall 1 is part of an enclosure 1 the surface 1a may face away from the enclosure and the surface 1b may face an interior of the enclosure. In this way, when the wall 1 is used to form an enclosure wall housing an active device (a device generating heat) the surface 1b may face the device. Heat generated by the device may pass through the passage 2 to the exterior 3 of the enclosure, with the heat entering the passage 2 at the second opening 7 and leaving the passage 2 at the first opening 6. A user may therefore be located on the first side 3 of the wall, outside of the enclosure. The user may attempt to look into the device via the passage 2 but, given that continuous straight line exists between the first and second openings 6, 7, the user is unable to do so. The enclosure comprising the wall 1 is therefore secure in the sense that a user is not able to see the contents of the enclosure. A user is also unable to insert a straight implement, e.g. a screwdriver, into the interior of the enclosure via the passage 2 since (as indicated by the dotted lines in Figure 1b) not attempt will be possible where the end of the screwdriver is able to emerge from the passage 2 through the opening 7 due to the two directions X, Y in which the passage 2 extends. Therefore, the wall 1 provides a wall for an enclosure that is able to dissipate heat from inside the enclosure and preventing the insertion of a tool inside the enclosure from the exterior.

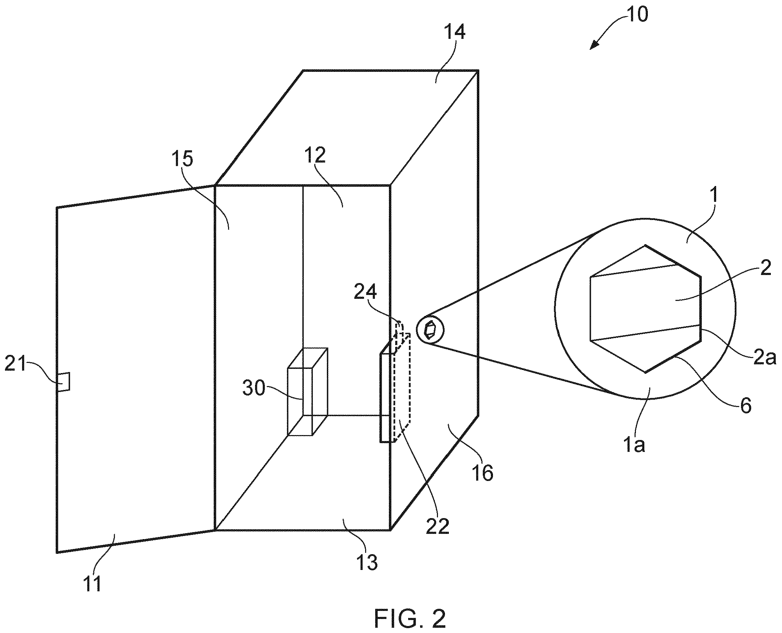

Figure 2 shows such an enclosure 10. The enclosure 10 comprises the wall 1 of the Figure 1a or Figure 1b examples as described above. Therefore Figure 2 shows an enclosure 10 comprising a wall 1 comprising a passage 2 for permitting air to pass from a first side of the wall, outside of the enclosure 10, to a second side of the wall, inside the enclosure 10, the passage 2 comprising a first opening forming an inlet for the passage on the first side of the wall (on the exterior of the enclosure) and a second opening forming an inlet for the passage on the second side of the wall (in the interior of the enclosure), wherein the passage extends through the wall in a first direction and in a second direction, the second direction being different to the first direction, such that a continuous straight line trajectory from the first opening to the second opening through the passage is prevented. This will be explained in further detail below.

The enclosure 10 of Figure 2 comprises a door 11, a back 12, a floor 13, a ceiling 14, and first and second opposing side walls 15, 16. The door 11 comprises a latch 21 (or some other means to enable the door 11 to be locked in a closed state the door 11 being shown in Figure 2 in an open state). The enclosure 10 (in this example, the second side wall 16 thereof) comprises a lock 22. The latch 21 and lock 22 may together form a locking device for the enclosure 10 such that when the door 11 is closed, and the latch 21 is received in the lock 22, the latch 21 is unable to be removed from the lock 22 unless the enclosure is unlocked. The locking and unlocking of the lock 22 and hence the enclosure 10 may be manual or automatic. Hence, the lock 22 may comprise an electronic lock, or electronically-actuated lock. The lock 22 may comprise a manual actuator 24 whose manual manipulation releases the lock 22 (releases the latch 21 from the lock 22) and therefore enables the door 11 to be opened. In other words, the actuator 24 may comprise a manual override for an electronic lock 22.

The enclosure 10 is to house an active device (the device not shown in Figure 2) and may comprise a locker for a device. The enclosure 10 comprises an electronic component 30, which may comprise a cable that may connect to the device (to connect the device to a network) or a power bank that may provide a source of power to the device. In this way, a device, when housed in the enclosure, may be charging and/or powered on and connected to a network. For example, this enables a user to collect a device (such as a laptop) from the enclosure 10 that (via its connection to the network) is already suitable to be used by that user (e.g. the network configures the device so that it is loaded the user's settings or preferences etc.).

As shown by the exploded view in Figure 2, in this example the side panel 16 comprises the wall 1 (as described above with reference to Figures 1a and/or 1b) comprising the passage 2 extending in two directions etc. As shown in Figure 2, the first opening 6 of the passage 2 provides an inlet to the passage 2 from the exterior, or outside, of the enclosure 10 and therefore the first passage section 2a extends from the exterior, or outside, of the enclosure 10 towards an interior, or inside, the enclosure. With continuing reference to Figures 1a and 1b above, it will be appreciated that the passage 2 extending in the two directions X, Y prevents a user from seeing into the enclosure 10 via the passage 2 (and therefore the user is prevented from seeing the device stored inside the enclosure 10 and/or the electronic component 30 etc.). Furthermore, the passage 2 extending in two directions X, Y prevents a user from inserting an implement such as a screwdriver into the enclosure 10 from outside the enclosure 10 (where they could use the screwdriver to manipulate the actuator 24 and therefore unlock the enclosure 10 from the inside).

In this example, although the side wall 16 of the enclosure 10 comprises the wall 1 (having the passage 2), any one of the door 11, back panel 12, floor 13, ceiling 14, and/or side wall 15 or side wall 16 may comprise the wall 1 having the passage 2. In this way, the greater number of panels of the enclosure 10 that comprise the wall 1 as described above the greater the ventilation through the enclosure 10, and the greater the enclosure's ability to dissipate (safely) any heat generated by an active device inside the enclosure 10. In some examples, a subset of the plurality of passages 2 may be interconnected, or joined. In these examples, the wall may comprise a connecting passages that extends from one passages in the plurality to another passage in the plurality.

Although Figure 2 depicts an enclosure 10 that is a prism, and therefore comprising panels (e.g. the door 11, back panel 12, floor 13, ceiling 14 and side walls 15 and 16) that are themselves substantially planar, or a rectangular prism in shape, in other examples the wall 1 may comprise a different shape. For example, the wall 1 may be curved (e.g. comprise a curved cross-section or profile, e.g. an arcuate or semicircular shape). In some examples, the wall 1 may be a portion of a sphere in shape such that the wall 1 may define a substantial spherical enclosure. The shape of the wall 1 may also vary according to how it is generated, for example a given wall 1 may be manufactured to have a different thickness to another wall 1. Therefore, the enclosure 10 (that the wall 1 may form a part of) may be of various shapes and may comprise curved sections and in these examples the wall 1 may be a straight wall, a curved wall, or a wall comprising both straight and curved sections.

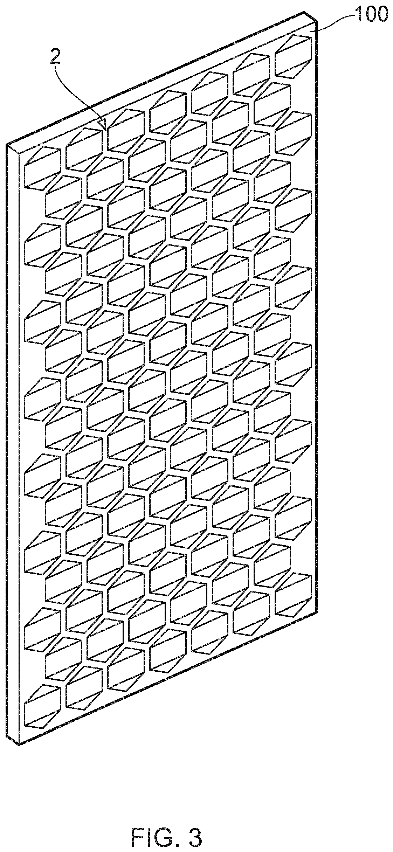

Figure 3 shows an example wall 100, which may comprise the wall 1 as described above. The wall 100 of the Figure 3 examples comprises a plurality of passages 2, or an array of passages 2. Each passage 2 in the array extends through the wall 100 wall in the first X and the second Y direction such that a continuous straight line trajectory is not possible through each passage 2 in the array. Therefore, the wall 100 comprises a plurality of passage 2 to improve the airflow through the wall 100 (and therefore improve air dissipation out of an enclosure comprising the wall, such as the enclosure 10. The wall 100 of this example therefore comprises a repeating pattern of holes or passages 2. As shown in Figure 3, each passage 2 comprises a hexagonal cross-section (or is hexagonal in shape). Therefore, in this example, the wall 100 comprises a honeycomb, or beehive, structure or array of holes or passages 2 to air to pass through the wall 100. Although, and as will be explained below, the passages may be of another shape in some examples.

In some examples, one of the passages 2 of the plurality of passages may be blocked. Put another way, one of the passages 2 may extend into and through the wall (in the first direction) from a first opening 6 and then into the wall (in the second direction) but not out of the wall. In this example, one of the passages 2 comprises a first opening 6 (e.g. on a first, exterior, side of the wall) but not a second opening. That passages is blocked in the sense that even air entering the passage from a first side of the wall 100 (or from the exterior of an enclosure comprising the wall) is unable to exit the passage and pass to a second side of the wall 100 (or to the interior of an enclosure comprising the wall). In some examples, a subset of the plurality of passages 2 may be blocked in the sense as described above. In some examples, in the manufacture of the wall 100 the subset of passages 2 that are to be blocked may be decided on-the-fly, and may be a random subset of passages 2. More specifically, and as will be described below, in some examples the wall 100 may be generated by processor executing instructions and the instructions may describe a random subset of passages to be blocked (generated without an outlet, or second opening). The wall 100 may be manufactured via an injection-molding process or via an additive manufacturing process.

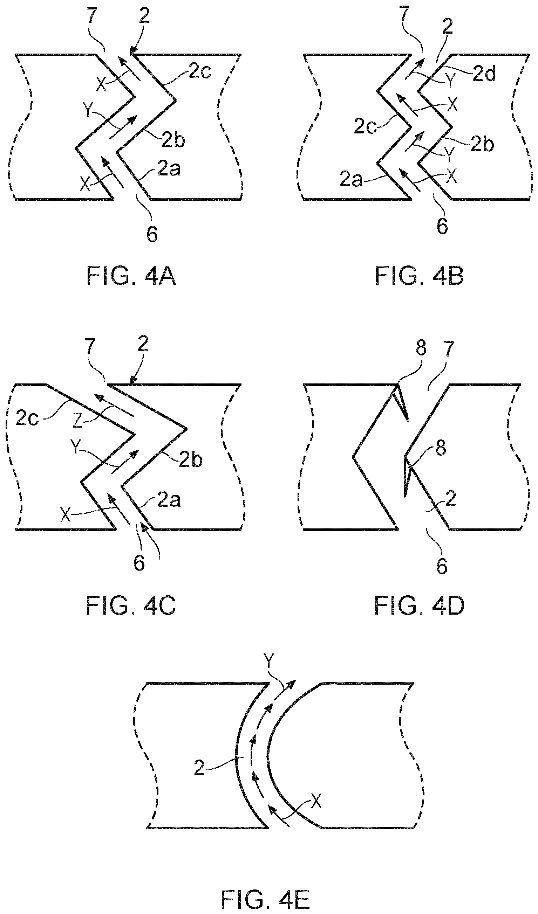

Figures 4A-4D show various kinds of passage 2 that may be formed in the wall 1 or the wall 100 as described above. Each passage 2 shown in each of Figures 4A-4B permits air to pass from a first side of the wall to a second side of the wall, the passage 2 comprising a first opening 6 forming an inlet for the passage 2 on the first side of the wall and a second opening 7 forming an inlet for the passage 2 on the second side of the wall, the passage 2 extending through the wall in a first direction X and in a second direction Y, the second direction Y being different to the first direction X, such that a continuous straight line trajectory from the first opening 6 to the second opening 7 through the passage 2 is prevented, or not possible.

Figure 4A shows a passage 2 that extends into the wall in the first direction X from the first opening 6, then extends through the wall in the second direction Y, and then extends through the wall in the first direction X to the second opening 7. In this example the passage 2 comprises a first passage section 2a that extends through the wall in the first direction X, a second passage section 2b that extends through the wall in the second direction Y between the first passage section 2a and a third passage section 2c, and a third passage section 2c that extends through the wall in the first direction X to the second opening 7.

Figure 4B shows a passage 2 that extends into the wall in the first direction X from the first opening 6, then extends through the wall in the second direction Y, and then extends through the wall in the first direction X, and then extends through the wall in the second direction Y to the second opening 7. In this example the passage 2 comprises a first passage section 2a that extends through the wall in the first direction X, a second passage section 2b that extends through the wall in the second direction Y between the first passage section 2a and a third passage section 2c, and a third passage section 2c that extends through the wall in the first direction X between the second passages section 2b and a fourth passage section 2d, and a fourth passage section 2d that extends through the wall in the second direction Y to the second opening 7.

Figure 4C shows a passage 2 that extends into the wall in the first direction X from the first opening 6, then extends through the wall in the second direction Y, and then extends through the wall in a third direction Z to the second opening 7. In this example the passage 2 comprises a first passage section 2a that extends through the wall in the first direction X, a second passage section 2b that extends through the wall in the second direction Y between the first passage section 2a and a third passage section 2c, and a third passage section 2c that extends through the wall in the third direction Z to the second opening 7. In this example the third direction Z is different to both the first direction X and the second direction Y.

In the example passage 2 described above with reference to Figures 1a and 1b, the passage 2 comprised first and second passage sections 2a, 2b defining a turn, or change of direction, of the passage. In the examples shown in Figures 4A and 4C the passages 2 comprise three passage sections defining two turns, or two changes of direction of the passage 2. In the example shown in Figure 4B the passage 2 comprises four passage sections defining three turns, or change of direction, of the passage 2. In these examples, even if a non-straight implement or flexible or non-rigid implement (like an endoscopic device) were attempted to be inserted in the passages 2 illustrated in Figures 4A-4C the device needs to pass through a tortuous path from the opening 6 to the opening 7. The chances of such a flexible device reaching the opening 7 may decrease with each additional turn (and therefore with each additional change of direction of the passage 2) since the interior walls of each additional passage section increase the chances of a flexible device being stuck in the passage 2. The minimum radius achievable for such a flexible device will prevent that device from passing through any passage having a lower radius than that minimum, and some passages 2 may be designed and/or manufactured with a particular minimum radius (e.g. of a particular flexible device) in mind..

In these examples, the passage comprises midpoints, being those portions of the passages between the first and last passage sections. For example, the passages of Figures 4A and 4C comprise two midpoints and the passage of Figure 4B comprises three midpoints. In order to achieve the prevention of a continuous straight line path from the opening 6 to the opening 7, the cross-sections of the two openings 6, 7 may not overlap in one example. In another example, there may be overlap between the cross-sections of the two openings 6, 7 but no overlap between the cross-section of the openings 6, 7 and the cross-section of one of the midpoints. In yet other examples there may be no overlap between the cross-sections of two of the midpoints.

Figure 4D shows a passage 2 that extends into the wall in the first direction X from the first opening 6, then extends through the wall in the second direction Y to the second opening 7, much like the passage 2 described above with reference to Figures 1a and 1b. However, the passage 2 in this example comprises a barb 8 (two are shown in Figure 4D but any number of barbs, including one, may be provided in other examples. One of the passage sections may comprise the barb. The barb 8 protrudes outwardly from an interior surface of the passage 2 into the passage 2. The barb 8 extends into center, or middle region, of the passage 2. The barb 8 may comprise a protrusion into the passage 2. The opening 7 may comprise the barb 8 in one example. In another example, one of the passage sections may comprise the barb 8. In some examples, the passage 2 may comprise a plurality of barbs 8.

In the 4D example even if a user were to attempt to penetrate through the passage to gain access to the second side of the wall (or to an interior of an enclosure comprising the wall) using a flexible tool, even if the tool had sufficiently flexibility to wind itself around the various turns of the passage, such a tool would be prevented from exiting the passage 2 via the opening 7 via engagement with the barb 8. More specifically, one of the passage sections of the passage 2 will guide a flexible tool into the outwardly-protruding barb 8 which will prevent the tool from advancing through the passage 2 further. In examples where the passage 2 comprises a plurality of barbs 8, even if the tool were to advance past the first barb 8 then it may be prevented from advancing further through the passage 2 by subsequent barbs.

Figure 4E shows a passage 2 that extends into the wall in the first direction X from the first opening 6, then extends through the wall in the second direction Y, and then extends through the wall in the first direction X to the second opening 7. In this example the passage 2 comprises a continuously curved passages section, part of which comprises a first passage section 2a that extends through the wall in the first direction X, and a second passage section 2b that extends through the wall in the second direction Y to the second opening 7. In other words, although the passage 2 comprises a continuously curved passage between the first and second openings 6, 7, a portion of the passage (e.g. an infinitesimal portion) extends in the first direction X and another portion of the passage (e.g. an infinitesimal portion) extends in the second direction Y. The passage 2 of the Figure 4E example extends in a plurality of different, and continuously changing, directions from the first opening 6 to the second opening 7. In other words, in some examples the passage 2 may comprise a curved passages from the first opening 6 to the second opening 7 and may extend through the wall in a plurality of different directions. In some examples, the passages 2 of the Figure 4E example may comprise a number of barbs 8 (e.g. the barbs as depicted in Figure 4D) protruding into the passage 2.

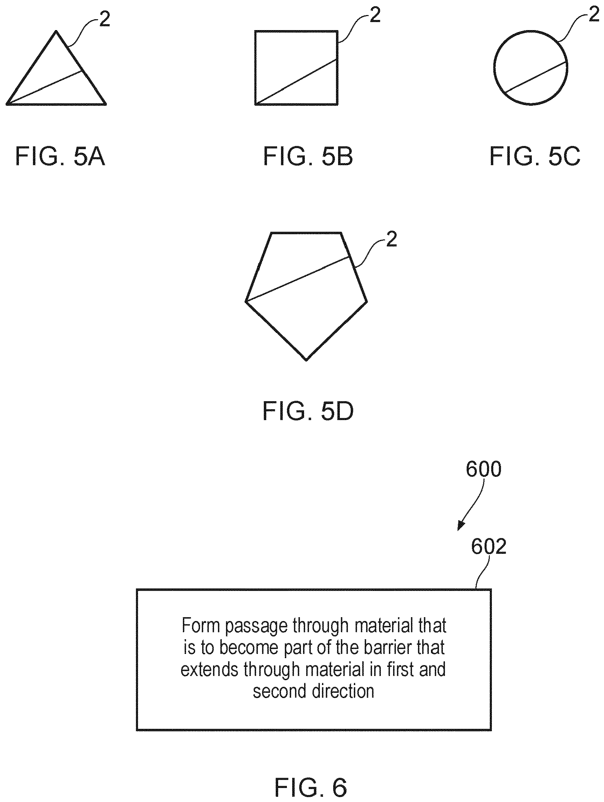

Figures 5A-5D show different passage 2 geometries. Although the passage 2 has been illustrate as comprising a hexagonal cross-section (see Figures 2 and 3), different cross-sections are illustrated in Figures 5A-5D. Figure 5A shows an example passage 2 with a triangular cross-section. Figure 5B shows an example passage 2 with a square cross-section, although in other examples the cross-section may be rectangular. Figure 5C shows a passage 2 with a circular cross-section, although in other examples the cross-section may be oval. Figure 5D shows a passage 2 with a pentagonal cross-section. In other examples the cross-section may be an n-gon (with n being any number). Any of the passages 2 illustrated in Figures 5A-5D may be used in the example walls 1, 100 illustrated in the examples above. In examples where the wall comprises a plurality of passages (e.g. the Figure 3 example) then the passages 2 may be of any shape, and may be of different shape. For example, the wall may comprise a plurality of passages with a first subset of the plurality having a cross-section of one shape (e.g. circular) a second subset having a cross-section of another shape (e.g. triangular). In examples where the plurality of passages (or a subset thereof) are of the same shape (e.g. all triangular, rectangular, or all n-gons, etc.) then the passages may be disposed in the wall in a tessellated fashion. In some examples, the passages may comprise the same shape but a different size (e.g. different sized circular holes distributed throughout the barrier). In this way, the barrier may comprise a fractal-array of passages.

Regarding cross-sections it will be appreciated that the or each passage comprises two perpendicular cross-sections. For example, a first cross-section may be defined as that whose normal vector is substantially aligned with the direction of the airflow through the passages, with these kinds of cross-sections being circular, rectangular, triangular, polygonal etc. and being the kind depicted in Figures 5A-D. The passage may comprise a second cross-section being a cross-section perpendicular to the first cross-section, with these kinds of cross-sections being depicted in Figures 4A-4E. In other words, the first cross-section of the passage may define a shape of the opening (the first and/or second opening) of the passage in the wall, with the second kind of cross-section may define a shape of the passage relative to the wall, or as the passage advances in the wall. It will then be appreciated that a passage according to examples herein may comprise a first and second cross-section, with the first and second cross sections, respectively, comprising any of the first cross-sections shown in any of Figures 5A-D and/or any of the second cross-sections shown in any of Figures 4A-4E. For example, a passage may comprise a hexagonal-shape opening (and therefore a hexagonal-shaped first cross-section), e.g. as shown in Figures 2 and 3, and may extend through the passage in a zig-zag fashion as shown in Figure 4B (e.g. comprising three turns) (therefore having a zig-zag shaped second cross-section). In another example, a passage may comprise a circular-shaped opening (and therefore a circular-shaped first cross-section), e.g. as shown in Figure 5C, and may extend through the passage in a circular or arc shape as shown in Figure 4E (e.g. comprising a curved or arc-shaped second cross-section), etc., and according to the examples herein, any given passage may comprise any number of barbs protruding into the passage (e.g. the barbs 8 of Figure 4D).

Figure 6 shows an example method 600, which may comprise a computer-implemented method, or additive manufacturing method, or which may be a method of injection moulding. The method 600 is a method for forming a barrier to at least partially enclose a device, The method 600 comprises, at block 602, forming, in a material that is to become part of the barrier, a passage through the material such that the passage extends through the material in a first direction from an inlet and in a second direction towards an outlet, the second direction being different to the first direction such that no continuous straight line trajectory is possible through the passage from the inlet to the outlet.

The barrier that is formed by the method 600 may comprise the wall 1, 100 as descried above and therefore the method 600 may be to form any of the walls 1, 100 described above. The method 600 may also comprise a method to form part of an enclosure to at least partially enclosure a device. The barrier may therefore comprise one of the surfaces (top, back side, etc.) of the enclosure 10 as described above with reference to Figure 3. In examples where the method 600 comprises an injection-molding method the material that is to become part of the barrier may comprise a plastics, ceramic, metallic, rubber, or resin material. In these examples block 602 may comprise pouring, or injecting, the heated material into a mold. Block 602 may comprise setting the material (e.g. hardening the material), for example while the material is in the mold.

The barrier may comprise a plurality of passages, with each passage extending through the material in the first direction from an inlet and in the second direction towards an outlet such that no continuous straight line trajectory is possible through each passage from the inlet to the outlet. For example, the method 600 may be a method of manufacturing the wall as depicted in Figure 3. In some examples, a subset of the plurality of passages may be blocked in that these passages comprise a first opening but no second opening. In these examples the mold, to form the barrier may be form this blocked subset of the passages in addition to the other subset of passages that are not blocked (and comprise first and second openings). As stated above, a subset of the plurality of passages may also be connected, or joined, to one another.

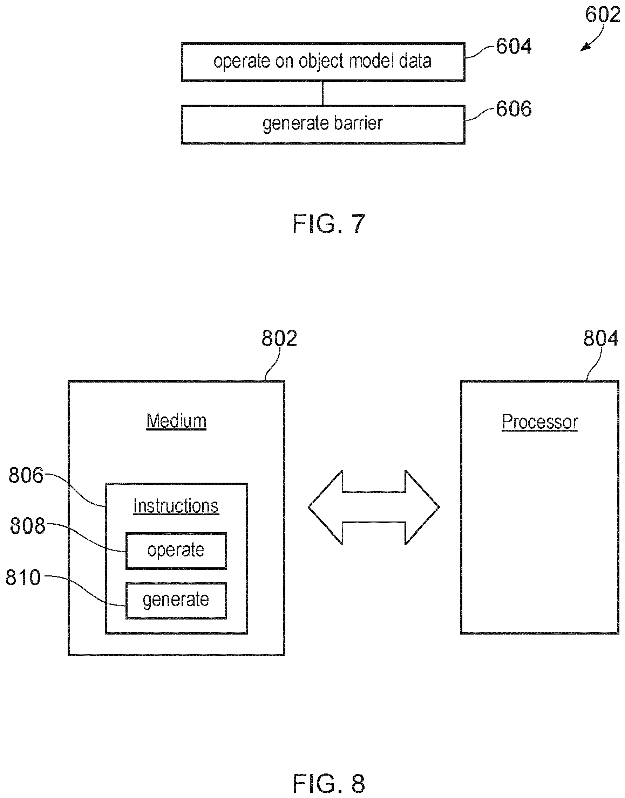

Figure 7 shows an example block 602 of the method 600 where the method 600 comprises an additive manufacturing method. In this example the method 600 may comprise a computer-implemented method. In the Figure 7 example the method 600 may comprise forming the barrier by additive manufacturing. In this example, the method 600 may generate the barrier through the solidification of a build material. In some examples, the build material may be a powder-like granular material, which may for example be a plastic, ceramic or metal powder. For example, build material may be deposited, for example on a print bed and processed layer by layer, for example within a fabrication chamber to form the barrier. According to one example, a suitable build material may be PA12 build material commercially referred to as V1R10A "HP PA12" available from HP Inc.

Block 602 may, in the Figure 7 example, comprise generating the barrier based on structural design data. This may involve a designer generating a three-dimensional model of the barrier to be generated, for example using a computer aided design (CAD) application. The model may define the solid portions of the barrier, and block 602 in this example may comprise processing the model data to generate slices of parallel planes of the model of the barrier, with each slice in some examples defining a portion of a respective layer of build material that is to be solidified or caused to coalesce by the additive manufacturing system to form the barrier by the method 600 of this example.

Block 602 of the method 600 in this example comprises, at block 604, operating, e.g. by a processor, for example a processor of a printing apparatus such as an additive manufacturing apparatus, on object model data, the object model data describing the barrier to be generated in the additive manufacturing process 600. In one example, operating, at block 604, may comprise receiving the object model data. In another example, operating, at block 604, may comprise determining the object model data. Block 602 in this example further comprises, at block 606, generating, e.g. by a processor, for example a processor of a printing apparatus such as an additive manufacturing apparatus, the barrier according to the object model data. Block 606 may comprise causing, e.g. by a processor as above, a print agent applicator to apply a print agent to a part of a layer of build material that corresponds to a portion of the barrier.

In some examples, the barrier described by the object model data comprises a plurality of passages, each passage extending through the material in the first direction from an inlet and in the second direction through the material such that no continuous straight line trajectory is possible through each passage from the inlet to the outlet. In these examples, the object model data may describe a random (or non-random, e.g. predetermined) subset of the plurality of passages in the barrier to be generated without a second opening, this subset of passages thereby having an inlet but no outlet. In these examples, operating, at block 604, on the object model data may comprise processing the object model data such that a random subset of passages are to be generated (at block 606) without the second opening. As described above, the passages in this subject are "blocked passages" in that no passage (at all) is possible from one side of the barrier to the other through the blocked passages. The object model data may comprise instructions that, when executed by a processor, cause a random subset of the plurality of passage to be designated as blocked passages, these passages being described by the object model data as not having a second opening. Block 602 may comprise modifying the object modal data, e.g. by a processor, to produce modified object model data, such that a subset of the plurality of passages described by the original object model data are described as blocked passages by the modified object model data. The object model data describing the barrier may describe any number of passages to be formed in the barrier and any number of turns (e.g. any number of passage sections and therefore any number of turns) the passage is to comprise, and also any number of barbs that the passage is to comprise. Operating, at block 604, on the object model data may, in some examples, comprise processing the object model data such that a random subset of passages are to be connected, or joined, when the barrier is generated (at block 606).

In some examples the object model data itself may describe the first and second directions, or may define the angle between the first and second directions, or may define the first direction and the angle that the second direction is to make with the second direction. In some examples, operating on the object model data may cause the first and second directions to be defined and in this way the passage geometry may be defined (e.g. randomly) by a processor operating on the data. The processor may therefore generate the barrier with passages having a random design that may be different per part and thus enclosure walls (barriers) may differ from enclosure to enclosure. The passage may be generated by various angles between the first and second directions (various zig-zag angles) and also sizes and lengths which in some examples may force a tighter turn radius (e.g. further preventing the advancement of a flexible tool). Therefore, generating the barrier by additive manufacturing allows different and unique barriers to be generated, each having a different design of passages. The random blocking of a subset of passages, as described above, may mean that it is not possible for a user to know in advance through which passages the interior of an enclosure comprising the barrier may be accessed. In some examples the object model data may prevent the generation of a passage doubling-back upon itself (e.g. prevent the generation of a passage extending away from the first opening, or inlet, and then back to the first opening). Therefore, in some examples, operating on the object model data may cause any of the following to be determined: the hole cross section and/or geometry of the hole, the first direction, the second direction, the curvature of the passage (e.g. whether the passage is to be a continuously curved passage), the rate of change of the curvature of the passage, the angle between the first and second directions, the radius of curvature of the passage, the size of the hole defining the passage, the thickness of the wall or barrier itself, the geometry (e.g. size and/or shape) of the wall or barrier itself (e.g. the wall or barrier may define a curved enclosure in some examples), a random subset of passages that are to be blocked, and/or a random subset of passages that are to be connected, or joined.

Figure 8 shows an example non-transitory machine-readable, or computer-readable, medium 802 comprising a set of instructions 806 stored thereon. The medium 802 is shown in Figure 8 associated with a processor 804. The instructions 806, when executed by the processor, 804 are to cause the processor 804 to perform a series of tasks. The instructions 806, when executed by the processor 804, may be to cause the processor to perform the method 600 (e.g. any of the blocks thereof such as block 602, 604, and 606). The instructions 806 comprise instructions 808 that, when executed by the processor 804, cause the processor to operate on object model data describing a barrier to be manufactured, the barrier to form an enclosure wall, wherein the barrier comprises a hole defining a passage for air to flow through the barrier, and wherein the hole extends through the barrier in a first and second direction defining a change in direction of the passage and such that an object cannot pass through the passage in a continuous straight line. For example, the instructions 808, when executed by the processor 804, may cause the processor 804 to perform block 604 of block 602 of the method 600. The instructions 806 comprise instructions 810 that, when executed by the processor 804, cause the processor to cause the barrier according to the object model data to be generated (e.g. cause an additive manufacturing apparatus to generate the barrier). For example, the instructions 808, when executed by the processor 804, may cause the processor 804 to perform block 606 of block 602 of the method 600. The barrier described by the object model data may comprise the wall 1 or wall 100 or part of the enclosure 10 as described above and therefore the instructions 806, when executed by the processor 804, may therefore be to cause the processor 804 to generate the wall 1 or wall 100 or (at least part of the) enclosure 10 as described above.

In some examples, the object model data may describe a plurality of holes arranged in a grid-like structure throughout the barrier, with each hole defining a passage and each hole extending through the barrier in the first and second directions defining a change of direction of the passage such that an object cannot pass through each passage in a continuous straight line. For example the object model data may describe a honeycomb or beehive structure where a plurality of hexagonal-shaped holes are to be formed as an array of holes in the barrier (e.g. as shown in Figure 3). Of course, as described above, the holes may be of any shape. The object model data describing the barrier may describe any number of holes/passages to be formed in the barrier and any number of turns (e.g. any number of passage sections and therefore any number of turns) the passage is to comprise, and also any number of barbs that the passage is to comprise.

In examples where the object model data describes a plurality of holes to be arranged through the barrier, the instructions 810, when executed by the processor 804, may cause the processor 804 to generate the barrier such that a random subset of the plurality of holes are blocked in that they comprise an inlet but not an outlet (a "blocked passage" as described above). In these examples, executing the instructions 806 may cause the processor 804 to assign a random subset of the plurality of passages as blocked passages (to be generated without an outlet or second opening). In these examples, executing the instructions 806 may cause the processor 804 to generate modified object model data, where the modified data describes the barrier but with a (e.g. random) subset of the holes not having an outlet. In these examples, the instructions 810, when executed by the processor 804, are to cause the processor 804 to generate the barrier according to the modified object model data. In some examples the subset of the holes to be blocked may not be random but may be described by the object model data. In some examples, executing the instructions 806 may cause the processor 804 to assign a random subset of passages to be connected, or joined (and this may be described by the aforementioned modified object model data generated by the processor. The instructions 806, when executed by the processor 804, may cause the processor to determine the hole cross section and/or geometry of the hole, the first direction, the second direction, the curvature of the passage (e.g. whether the passage is to be a continuously curved passage), the rate of change of the curvature of the passage, the angle between the first and second directions, the radius of curvature of the passage, and/or the size of the hole defining the passage, the thickness of the wall or barrier itself, the geometry (e.g. size and/or shape) of the wall or barrier itself (e.g. the wall or barrier may define a curved enclosure in some examples), a random subset of passages that are to be blocked, and/or a random subset of passages that are to be connected, or joined.

As stated above, the instructions 806 may be to assign the passage directions. In other words, the instructions 806 may cause the processor 804 to generate the passage extending in two directions determined by the processor 804 executing the instructions 804. In other examples, the object model data itself may describe the first and second directions, or may define the angle between the first and second directions. In some examples, the object model data may define the first direction and the processor 804 executing the instructions 806 may determine the second direction based on an angle between the directions. In this way, executing the instructions 806, the processor 804 may be to generate the barrier having a unique set of (random) hole geometries, e.g. sizes, shapes, directions. The instructions 806 may therefore cause the processor 804 to generate the barrier with passages having a random design that may be different per part and thus enclosure walls (barriers) may differ from enclosure to enclosure. The passage may be generated by various angles between the first and second directions (various zig-zag angles) and also sizes and lengths which in some examples may force a tighter turn radius (e.g. further preventing the advancement of a flexible tool). Therefore, generating the barrier by additive manufacturing allows different and unique barriers to be generated, each having a different design of passages. As described above, the random blocking of a subset of passages may mean that it is not possible for a user to know in advance through which passages the interior of an enclosure comprising the barrier may be accessed. In some examples the instructions 806 may comprise instructions that, when executed by the processor 804, prevent the processor 804 from causing the generation of a passage doubling-back upon itself (e.g. prevent the generation of a passage extending away from the first opening, or inlet, and then back to the first opening).

Some examples herein therefore relate to a wall, or barrier, for an enclosure that can dissipate heat from inside the enclosure. Holes, or passages, in the wall allow the heat to dissipate but the holes extending in two directions through the passage means that although the holes may be present for air flow, a person is prevented from seeing whether the wall shields (or the enclosure houses) a valuable device, in addition to compromising a person's ability to access the other side of the wall (e.g. inside the enclosure) via the hole. In this way, the wall disclosed herein can provide a secure surface for an enclosure housing an active device in that the wall allows the enclosure to dissipate heat generated from the device and to enclosure the device in a safe and secure manner (in that a person cannot see into the enclosure nor can they access the interior of the enclosure through one of its ventilation holes).

Examples in the present disclosure can be provided as methods, systems or machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. It shall be understood that each flow and/or block in the flow charts and/or block diagrams, as well as combinations of the flows and/or diagrams in the flow charts and/or block diagrams can be realized by machine readable instructions.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing, thus the instructions executed on the computer or other programmable devices realize functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. It is intended, therefore, that the method, apparatus and related aspects be limited only by the scope of the following claims and their equivalents. It should be noted that the above-mentioned examples illustrate rather than limit what is described herein, and that those skilled in the art will be able to design many alternative implementations without departing from the scope of the appended claims.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A wall for an enclosure, the wall comprising
a passage for permitting air to pass from a first side of the wall to a second side of the wall, the passage comprising a first opening forming an inlet for the passage on the first side of the wall and a second opening forming an inlet for the passage on the second side of the wall, wherein the passage extends through the wall in a first direction and in a second direction, the second direction being different to the first direction, such that a continuous straight line trajectory from the first opening to the second opening through the passage is prevented.

2. A wall according to claim 1, wherein the passage comprises an interior surface and wherein the interior wall comprises a barb protruding outwardly from the interior surface and into the passage.

3. A wall according to claim 1, further comprising a plurality of passages, with each passage extending through the wall in the first and the second direction such that a continuous straight line trajectory is not possible through each passage.

4. A wall according to claim 3 wherein one of the passages in the plurality extends into and through the wall but not out of the wall.

5. A wall according to claim 1 wherein the first and second directions are at 45 degrees to one another.

6. A wall according to claim 1 wherein the passage extends into the wall in the first direction from the first opening, then extends through the wall in the second direction, and then extends through the wall in the first direction to the second opening.

7. A wall according to claim 1 wherein the passage extends into the wall in the first direction from the first opening, then extends through the wall in the second direction, and then extends through the wall in the first direction, and then extends through the wall in the second direction to the second opening.

8. A wall according to claim 1 wherein the passage comprises a curved passage.

9. A method for forming a barrier to at least partially enclose a device, the method comprising:
forming, in a material that is to become part of the barrier, a passage through the material such that the passage extends through the material in a first direction from an inlet and in a second direction towards an outlet, the second direction being different to the first direction such that no continuous straight line trajectory is possible through the passage from the inlet to the outlet.

10. A method according to claim 9, wherein the barrier comprises a plurality of passages, with each passage extending through the material in the first direction from an inlet and in the second direction towards an outlet such that no continuous straight line trajectory is possible through each passage from the inlet to the outlet.

11. A method according to claim 9 comprising a method for use in additive manufacturing, the method comprising:
operating on object model data, the object model data describing the barrier to be generated in an additive manufacturing process; and
generating the barrier according to the object model data.

12. A method according to claim 11, wherein the barrier described by the object model data comprises a plurality of passages, with each passage extending through the material in the first direction from an inlet and in the second direction through the material such that no continuous straight line trajectory is possible through each passage from the inlet to the outlet, and wherein the object model data describes a random subset of the plurality of passages in the barrier to be generated without a second opening, this subset of passages thereby having an inlet but no outlet.

13. A non-transitory machine-readable medium comprising a set of machine-readable instructions stored thereon which, when executed by a processor, cause the processor to:
operate on object model data describing a barrier to be manufactured, the barrier to form an enclosure wall, wherein the barrier comprises a hole defining a passage for air to flow through the barrier, and wherein the hole extends through the barrier in a first and second direction defining a change in direction of the passage and such that an object cannot pass through the passage in a continuous straight line; and to
cause the barrier to be according to the object model data.

14. A non-transitory machine-readable medium according to claim 13, wherein the object model data describes a plurality of holes arranged in a grid-like structure throughout the barrier, with each hole defining a passage and each hole extending through the barrier in the first and second directions defining a change of direction of the passage such that an object cannot pass through each passage in a continuous straight line.

15. A non-transitory machine-readable medium according to claim 14, wherein the instructions, when executed by a processor, are to cause the processor to:
cause the barrier to be generated such that a random subset of the plurality of holes are blocked in that they comprise an inlet but not an outlet.
